Europäisches Patentamt

European Patent Office

Office européen des brevets

(11) Veröffentlichungsnummer : **0 237 689**
**B1**

(12) ## EUROPÄISCHE PATENTSCHRIFT

(45) Veröffentlichungstag der Patentschrift :
24.01.90

(21) Anmeldenummer : 86730161.6

(22) Anmeldetag : 16.10.86

(51) Int. Cl.⁵ : **C 10 L 5/46, B 03 B 9/06**

(54) **Verfahren zur Herstellung eines feinteiligen Brennstoffes.**

(30) Priorität : 28.02.86 DE 3607082

(43) Veröffentlichungstag der Anmeldung :
23.09.87 Patentblatt 87/39

(45) Bekanntmachung des Hinweises auf die Patenterteilung : 24.01.90 Patentblatt 90/04

(84) Benannte Vertragsstaaten :
AT BE CH DE ES FR GB IT LI LU NL SE

(56) Entgegenhaltungen :
FR-A- 652 640
FR-A- 2 496 495
FR-A- 2 577 235
GB-A- 21 192
GB-A- 1 105 143

(73) Patentinhaber : MANNESMANN Aktiengesellschaft
Mannesmannufer 2 Postfach 5501
D-4000 Düsseldorf 1 (DE)

(72) Erfinder : Liss, Ulrich
Kaltenhardtstrasse 81
D-4630 Bochum (DE)
Erfinder : Skaletz, Heinz J.
Kölner Strasse 116
D-4350 Recklinghausen (DE)
Erfinder : Vollmer, Henning, Dr.
Frauenlobstrasse 110
D-4630 Bochum (DE)

(74) Vertreter : Meissner, Peter E., Dipl.-Ing. et al
Patentanwälte Dipl.-Ing. Walter Meissner Dipl.-Ing.
Peter E. Meissner Dipl.-Ing. Hans-Joachim Presting
Herbertstrasse 22
D-1000 Berlin 33 (DE)

**Beschreibung**

Die Erfindung betrifft ein Verfahren zur Herstellung eines feinteiligen Brennstoffes aus Hausmüll, hausmüllähnlichen Gewerbeabfällen, Sperrmüll und/oder organischen Rückständen aus der Land- und Forstwirtschaft.

Aus der DE-PS 25 13 767 ist es bekannt, eine zellulosereiche Fraktion aus Abfällen abzutrennen, die Fraktion durch Säurebehandlung zu verspröden, sie anschließend zu trocknen und zu einem pulverförmigen Brennstoff zu vermahlen, der in herkömmlichen oder modifizierten Staubbrennern eingesetzt werden kann.

In der DE-PS 31 05 597 ist ein Verfahren zur Herstellung feinkörniger Fraktionen aus Müll beschrieben, bei dem nach der Grobzerkleinerung des Mülls zunächst eine Magnetabscheidung der Eisenanteile vorgenommen wird. Danach werden die Feinfraktion, eine schwere und eine leichte Grobfraktion abgetrennt, wobei die beiden letzten einer getrennten Zerkleinerung zugeführt werden. Die drei Fraktionen werden dann wieder miteinander vermischt und gemeinsam getrocknet. Der getrocknete, zerkleinerte Müll wird dann nach Partikelgröße in drei Fraktionen aufgeteilt, die jeweils für sich wiederum in eine leichte und eine schwere Fraktion aufgeteilt werden. Während die leichten Teilfraktionen .wahlweise getrennt oder gemischt erfaßt werden und als Brennstoff zur Verfügung stehen, werden die schweren Teilfraktionen in einem gemeinsamen Silo gesammelt. Dieses Verfahren führt somit zu einer weitestgehenden Abtrennung der inerten, d. h. der vorwiegend anorganischen und nichtbrennbaren Müllbestandteile von der brennbaren Fraktion.

Bei den Anwendungen derartiger Brennstoffherstellungsverfahren ergeben sich oftmals eine Reihe sicherheitstechnischer Probleme, da der gewonnene staubförmige Brennstoff sehr reaktiv sein kann, d. h. zu Selbstentzündungen neigt.

Diese Brennstoffeigenschaft kann bereits beim Herstellungsprozeß zu Verpuffungen führen, wenn keine ausreichend inerte Atmosphäre vorhanden ist. Ebenso muß bei Lagerung, Transport und insbesondere beim Umschlag auf eine hinreichend inerte Atmosphäre geachtet werden, was die Anwendung und Durchführung des Verfahrens erschwert.

Der vorliegenden Erfindung liegt die Aufgabe zugrunde, ein Verfahren zur Herstellung einer Feinfraktion aus Hausmüll bzw. hausmüllähnlichen Gewerbeabfällen und/oder organischen Rückständen aus der Land- und Forstwirtschat für den energetischen Einsatz anzugeben, bei dem der sicherheitstechnische Aufwand bei Herstellung, Lagerung, Transport und Umschlag weitestgehend entfallen kann.

Diese Aufgabe wird durch ein Verfahren mit den Merkmalen des Patentanspruchs 1 gelöst. Vorteilhafte Weiterbildungen sind in den Unteransprüchen 2-5 angegeben.

Aus dem Gesamtmüll werden bei dem vorliegenden Verfahren nur die magnetische Eisenfraktion, eine nichtzerkleinerbare Restfraktion und ein wesentlicher Anteil der Produktfeuchte abgetrennt und ausgeschleust. Das Abtrennen der Eisenmetalle ist notwendig, um in der Stufe der Feinzerkleinerung Aggregateschäden zu vermeiden. Der Anteil der nicht oder nur sehr schwer zerkleinerbaren Restfraktion ist in erster Linie von der Rohmüllzusammensetzung abhängig. Eine Reduzierung der Produktfeuchte ist notwendig, weil sonst das Endprodukt nicht lagerstabil ist und sich biologisch umsetzt. Der hohe Sicherheitsaufwand ist bei dieser Verfahrensauslegung im Gegensatz zu den bekannten Verfahren der Brennstoffstaubherstellung aus Hausmüll nicht erforderlich, weil durch das Verbleiben der Inertmaterialien (nicht oder nur sehr schwer brennbare Materialien) im Mahlprodukt die Gefahren von Explosion und Selbstentzündung praktisch eliminiert werden. Ein weiterer produktspezifischer Vorteil ergibt sich dadurch, daß durch die vorhandenen Inertmaterialien eine Vermahlung entscheidend begünstigt wird.

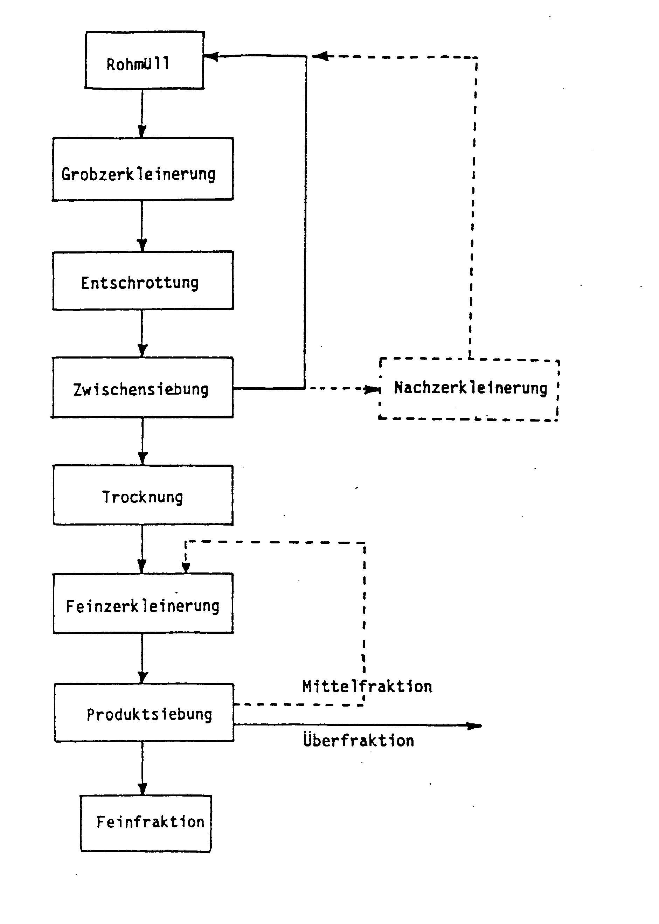

Das Verfahren läßt sich grundsätzlich unterteilen in die Verfahrensschritte grobzerkleinerung, Magnetabscheidung, Zwischensiebung, Trocknung, Feinzerkleinerung und Produktsiebung, wie es in der Abbildung schematisch dargestellt ist. Zur Grobzerkleinerung des Hausmülls sind vorzugsweise robuste Zerkleinerungsaggregate einzusetzen, wie sie bei der Rohmüllzerkleinerung Stand der Technik sind (z. B. Prallmühlen, Prall-Hammermühlen, Prallreißer, Hammermühlen). Gesondert angelieferter Sperrmüll ist zweckmäßigerweise in dafür geeigneten Systemen vorzuzerkleinern, auf z. B. Sperrgutscheren, Rotorscheren. An die Vorzerkleinerung des Rohmülls schließt sich eine Magnetabscheidungsstufe an, in der mit an sich bekannten Verfahrenseinheiten (z. B. Magnet-Bandrollen, Magnet-trommeln, Überbandmagneten) die vorzerkleinerte Hausmüllfraktion von den magnetisierbaren Bestandteilen befreit wird. Der Magnetabscheidungsstufe nachgeschaltet ist die Verfahrensstufe der Zwischensiebung, in der mit geeigneten Siebaggregaten (z. B. Vibrationssieben, Kreisschwingsieben, Spannwellensieben, Trommelsieben) eine Überfraktion ab einer Korngröße von 50 mm, vorzugsweise von 30 mm aus dem Hauptstoffstrom separiert und entweder zum Zerkleinerungsaggregat der Vorzerkleinerung zurückgeführt oder einem speziell für diese Überfraktion besser geeigneten alternativen Zerkleinerer aufgegeben wird. In der sich an die Zwischensiebung anschließenden Verfahrensstufe der Materialtrocknung wird die vorzerkleinerte, von Eisenschrott befreite Müllfraktion in dafür geeigneten Trocknungsaggregaten (z. B. Stromtrockner, Trommeltrockner) soweit aufgetrokknet, daß das getrocknete Material lagerstabil ist und den brenntechnischen Anforderungen genügt. Hierfür sollte der Feuchtegehalt maximal 15 Gewichts-%, vorzugsweise etwa 10 Gewichts-% betragen. Im Anschluß an die Trocknungsstufe ist in der vorliegenden Verfahrenskette die Stufe der Feinzerkleinerung angeordnet, bei der mit dafür geeigneten Mahlaggregaten (z. B. Planscheibenmühlen, Zahnscheibenmühlen, Stiftmühlen, Pendelschlagmühlen, Kugelmühlen, Pendelmühlen, Hammermühlen) eine Produktteilchengröße von maximal 10 mm, vorzugsweise kleiner 4 mm erreicht wird, die eine energetische Nutzung zuläßt.

In der am Ende der Verfahrenskette angeordneten Stufe der Produktsiebung, deren Aggregatebestückung vom Prinzip her gleichermaßen aufgebaut sein kann wie die Zwischensiebung, wird die von der Partikelgröße her nutzbare Fraktion von der nicht einsetzbaren Überfraktion getrennt. Dabei ist es möglich, mehrere Überfraktionen nach Korngrößen gestaffelt abzutrennen und ggf. einen Teil der Fraktionen dem Mahlaggregat erneut aufzugeben.

Das Verfahren führt zu einem feinkörnigen Brennstoff, der insbesondere in sicherheitstechnischer Hinsicht problemlos handhabbar ist und der in herkömmlichen oder modifizierten Staubbrennern verfeuerbar oder auch direkt in energieintensiven Sonderverfahren (z. B. Zementherstellung) einsetzbar ist. Der Brennstoff kann auch bei der thermischen Herstellung von Baumaterialien in das Rohmaterial eingegeben und mit diesen zusammen gebrannt werden, so daß auf diesem Wege ein poröses Endprodukt herstellbar ist.

## Patentansprüche

1. Verfahren zur Herstellung eines feinteiligen Brennstoffes aus Hausmüll, hausmüllähnlichen Gewerbeabfällen und/oder organischen Abfällen aus der Land- und Forstwirtschaft, bei dem der einen Anteil nichtbrennbarer Stoffe enthaltende Müll nach einer Grobzerkleinerung einer Magnetabscheidung zur Entfernung von Eisenbestandteilen unterzogen und danach feinzerkleinert und getrocknet wird, dadurch gekennzeichnet,
— daß nach der Magnetabscheidung eine Zwischensiebung vorgenommen wird, bei dem der Siebdurchgang eine Teilchengröße von maximal 50 mm aufweist,
— daß der Siebdurchgang der Zwischensiebung getrocknet wird auf eine Restfeuchte von maximal 15 Gewichts-%,
— daß an die Trocknung eine Feinzerkleinerung angeschlossen wird und
— daß danach der getrocknete zerkleinerte Müll einer Produktsiebung unterzogen wird, wobei der feinkörnige Brennstoff als Siebdurchgang mit einer Teilchengröße von maximal 10 mm gewonnen wird.

2. Verfahren nach Anspruch 1, dadurch gekennzeichnet, daß der Siebüberlauf der Zwischensiebung direkt in die Grobzerkleinerung zurückgeführt wird.

3. Verfahren nach Anspruch 1, dadurch gekennzeichnet, daß der Siebüberlauf der Zwischensiebung einer gesonderten Nachzerkleinerung zugeführt und danach in der Grobzerkleinerung mit dem Rohmüll vermischt wird.

4. Verfahren nach einem der Ansprüche 1-3, dadurch gekennzeichnet, daß der Siebüberlauf der Produktsiebung aus dem Verfahren ausgeschleust wird.

5. Verfahren nach einem der Ansprüche 1-3, dadurch gekennzeichnet, daß in der Produktsiebung eine Mittelfraktion mit einer Teilchengröße von 10 bis 20 mm abgetrennt und in die Feinzerkleinerung zurückgeführt und die Überfraktion (größer 20 mm) aus dem Verfahren ausgeschleust wird.

## Claims

1. Process for producing a finely-dispersed fuel from domestic waste, domestic waste-like industrial waste and/or organic waste from agriculture and forestry, in which, after coarse crushing, the waste containing a portion of non-combustible substances is subjected to magnetic separation for removal of iron constituents, and then is finely crushed and dried, characterised in that
— after the magnetic separation intermediate screening is carried out, in which the undersize has a particule size of at most 50 mm,
— the undersize from the intermediate screening process is dried to a residual moisture content of at most 15 % by weight,
— fine crushing succeeds the drying process, and
— thereafter the dried, crushed waste is subjected to product screening, whereby the finely-dispersed fuel is obtained as undersize having a particle size of at most 10 mm.

2. Process according to Claim 1, characterised in that the screen overflow of the intermediate screening process is recycled directly into the coarse crushing process.

3. Process according to Claim 1, characterised in that the screen overflow of the intermediate screening process is conveyed to a separate subsequent crushing process and then is mixed with the raw waste in the coarse crushing process.

4. Process according to one of Claims 1-3, characterised in that the screen overflow of the product screening process is discharged from the process.

5. Process according to one of Claims 1-3, characterised in that in the product screening process a middle fraction having a particle size of 10 to 20 mm is separated off and recycled into the fine crushing process and the oversized fraction (larger than 20 mm) is discharged from the process.

## Revendications

1. Procédé pour la fabrication d'un combustible finement pulvérisé à partir de déchets ménagers, déchets industriels analogues aux déchets ménagers et/ou résidus organiques provenant d'exploitations agricoles et forestières, dans lequel les déchets contenant une part de matières non combustibles sont soumis, après un concassage grossier, à une séparation magnétique en vue d'éliminer les composants ferreux, puis broyés finement et séchés, caractérisé en ce que

— après la séparation magnétique, on procède à un criblage intermédiaire dans lequel le produit passé présente une dimension de particule de 50 mm maximum,

— le produit passé du criblage intermédiaire est séché jusqu'à une humidité résiduelle de 15 % en poids maximum,

— le séchage est suivi d'un broyage fin, et

— les déchets séchés broyés sont ensuite soumis à un criblage après lequel on obtient le combustible finement granulé sous la forme d'un produit passé ayant une dimension de particule de 10 mm maximum.

2. Procédé selon la revendication 1, caractérisé en ce que le refus du criblage intermédiaire est ramené directement au concassage.

3. Procédé selon la revendication 1, caractérisé en ce que le refus du criblage intermédiaire est amené à un reconcassage séparé puis mélangé avec les déchets bruts dans le concassage grossier.

4. Procédé selon l'une des revendications 1 à 3, caractérisé en ce que le refus du criblage du produit est éclusé en dehors du procédé.

5. Procédé selon l'une des revendications 1 à 3, caractérisé en ce que, dans le criblage du produit, une fraction moyenne d'une dimension de particule de 10 à 20 mm est séparée et ramenée au broyage fin, et que la fraction principale (dimension supérieure à 20 mm) est éclusée hors du procédé.